# EUROPEAN PATENT SPECIFICATION

(11) **EP 0 678 821 B1**
(45) Date of publication and mention of the grant of the patent: **27.05.1998**
(21) Application number: 95104739.8
(22) Date of filing: 19.12.1989
(51) Int. Cl.: G06K 7/10

(54) **Optical scanner**
Optischer Abtaster
Dispositif de balayage optique

(30) Priority: 20.12.1988 JP 325033/88; 20.12.1988 JP 325034/88; 20.12.1988 JP 325035/88; 13.01.1989 JP 6702/89; 19.01.1989 JP 12609/89
(43) Date of publication of application: 25.10.1995
(62) Divisional of application: 89313249.8
(73) Proprietor: FUJITSU LIMITED, Kawasaki-shi, Kanagawa 211 (JP)
(72) Inventor: Aritake, Hirokazu, c/o Fujitsu Limited, Kawasaki-shi, Kanagawa 211 (JP); Ichikawa, Toshiyuki, c/o Fujitsu Limited, Kawasaki-shi, Kanagawa 211 (JP); Yamazaki, Kozo, c/o Fujitsu Limited, Kawasaki-shi, Kanagawa 211 (JP); Yamagishi, Fumio, c/o Fujitsu Limited, Kawasaki-shi, Kanagawa 211 (JP); Ikeda, Hiroyuki, c/o Fujitsu Limited, Kawasaki-shi, Kanagawa 211 (JP)
(74) Representative: Stebbing, Timothy Charles

(56) References cited:
- EP-A- 0 263 696
- US-A- 4 266 846
- US-A- 4 687 282

## Description

This invention relates to an optical scanner for reading a bar code or the like making use of a scanned laser beam, and more particularly to an optical scanner for a POS (point-of-sales) terminal.

One of various types of optical scanners which scan a laser beam in accordance with a desired pattern is a hologram scanner which employs a hologram disk as a scanning means. Such employment of a hologram disk as a scanning means enables formation of a complicated scanning pattern with a simplified optical system and realization of bar code readers having a deep reading depth.

A POS bar code reader (POS scanner), which is one of various types of optical scanners, moves across a bar code applied to a commodity above a reading window to read the bar code information with a laser beam and is constituted from a laser beam generating light source, a laser beam shaping optical system, a scanning optical system, a signal light detecting optical system, a wave form shaping circuit and a bar code symbol demodulating circuit. A laser beam emitted from a He-Ne laser is shaped into a beam of a suitable diameter by the beam shaping optical system and then scanned to form a universally readable scanning pattern by the scanning optical system, and a bar code is irradiated with the scanning pattern. Scattered light reflected from the bar code is condensed by the signal light detecting optical system, in which signal light is converted into an electric signal by a photo-detector. The electric signal is shaped by the signal waveform shaping circuit and then converted by the bar code symbol demodulating circuit into numerical values, which are then sent to a POS terminal.

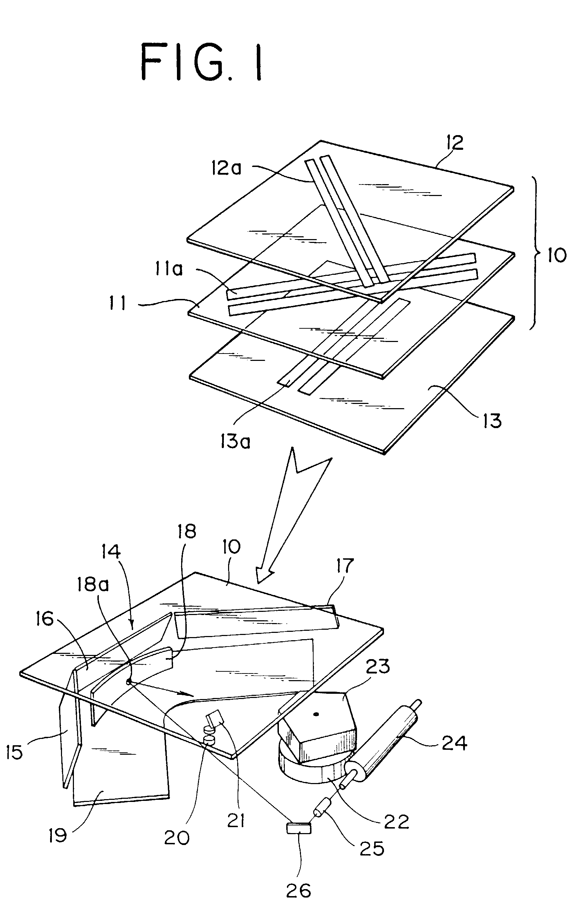

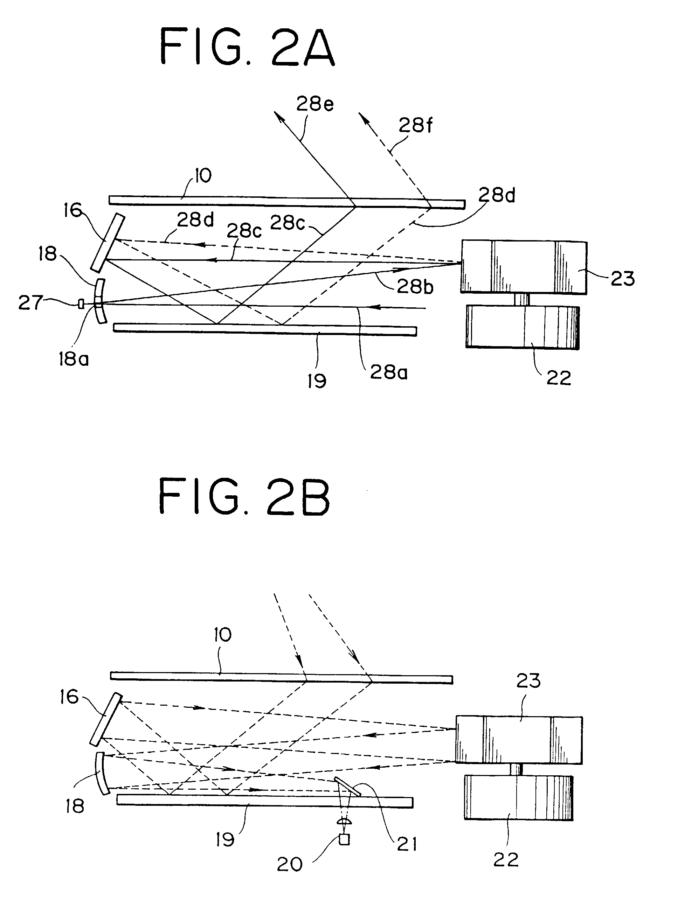

A prior art optical scanner is disclosed in U.S. Patent No. 4,848,862 (which corresponds to EP-A-0 263 696) wherein a rotary polygon mirror is employed as a laser beam scanning means and strip holograms of the transmission type are employed for a reading window. An outline of the prior art optical scanner will be first described with reference to FIGS. 1, 2A and 2B. Referring first to FIG. 1, a reading window generally denoted at 10 is composed of three transparent substrates 11, 12 and 13 having strip holograms 11a, 12a and 13a, respectively, of the transmission type formed in different directions from each other and adhered in layers to each other such that the strip holograms 11a, 12a and 13a of the transmission type thereof may extend in an intersecting relationship to each other. As shown at a lower portion of FIG. 1, located below the reading window 10 are a scanning pattern generating mirror means 14 consisting of three side mirrors 15, 16 and 17, a concave mirror 18 having a through-hole 18a formed therein and having a curved reflecting face on an inner surface thereof, a bottom mirror 19 disposed in parallel to the reading window 10, a photo-detector 20, a mirror 21, and a polygon mirror 23 having five reflecting faces and connected to be driven to rotate by a motor 22. Such optical parts as listed above are mounted in a predetermined positional relationship together with a He-Ne laser tube 24, a beam shaper 25 and a reflecting mirror 26 on a base not shown to generally constitute the optical scanner.

Operation of the optical scanner will be described subsequently with reference to FIGS. 2A and 2B. A laser beam emitted from the laser tube 24 is first shaped in beam diameter thereof by the beam shaper 25 and then reflected toward the concave mirror 18 by the reflecting mirror 26. As shown in FIG. 2A, the laser beam 28a reflected by the reflecting mirror 26 passes through the through-hole 18a of the concave mirror 18 and is then reflected by a back mirror 27, whereafter it passes through the through-hole 18a again and is introduced to the polygon mirror 23. The laser beam 28b is then scanned within a predetermined range in accordance with an inclination of reflecting faces and rotation of the polygon mirror 23 so that it makes scanning laser beams 28c and 28d which successively scan the three side mirrors 15, 16 and 17. The scanning laser beams 28c and 28d are projected toward the reading window 10 by way of the side mirror 15, 16 or 17 and the bottom mirror 19 to successively scan the three strip holograms 11a, 12a and 13a of the transmission type which are different in direction from each other. The laser beams 28e and 28f diffracted by any of the transmission type strip holograms 11a, 12a and 13a are projected as scanning lines of predetermined directions, and a desired scanning pattern is formed by such laser beams 28e and 28f.

On the other hand, as shown in FIG. 2B, signal light from a bar code affixed to a commodity is diffracted by the reading window 10 and introduced to the bottom mirror 19 and then reflected successively by the bottom mirror 19, side mirror 16 and polygon mirror 23 so that it is introduced to the concave mirror 18. The scattered light signal is condensed and reflected by the concave mirror 18 and then introduced by way of the mirror 21 into and detected by the photo-detector 20.

With the optical scanner having such a construction as described above, since a laser beam is projected from the reading window 10 such that a plurality of scanning lines having different directions may intersect each other in every plane above the reading window 10, no distance is required between the reading window and a bar code to be read. Consequently, reduction in thickness of the apparatus can be attained.

However, the optical scanner disclosed in U.S. Patent No. 4,848,862 necessitates three horizontally divided side mirrors incorporated below the reading window in order to generate three scanning lines of different directions above the reading window. Since the two opposite side ones of the three side mirrors are disposed such that they extend outwardly of the reading window, the outer profile of the optical scanner apparatus must be made greater than the size of the reading window. Accordingly, the optical scanner is disadvantageous in that the entire apparatus cannot be made compact sufficiently. Besides, since the optical scanner has a two-story structure wherein the centrally located side mirror is disposed on the concave mirror, it is disadvantageous in that the entire apparatus cannot be reduced in thickness sufficiently.

A further problem with US-A-4 848 862 is the number of man-hours required to adjust the apparatus.

Accordingly, it is desirable to provide an optical scanner which overcomes such drawbacks of the prior art apparatus as described above and enables attainment of sufficient miniaturization of the apparatus.

According to a first aspect of the present invention, there is provided an optical scanner including a light source for generating a laser beam, a polygon mirror driven to rotate for linearly scanning the laser beam, a reading window, a scanning pattern generating means for deflecting the laser beam reflected by the polygon mirror to produce a scanning pattern formed from a plurality of scanning lines on the reading window, a photo-detector for detecting scattered signal light scattered by an object to be read which is positioned in the neighbourhood of the reading window, and a light condensing means for deflecting and condensing the scattered signal light to the photo-detector characterised in that, the scanning pattern generating means is formed from a plurality of plane mirrors and at least one hologram of the reflection type; said light condensing means is constituted from a hologram of the reflection type; and the light condensing means and said at least one hologram are integrated with each other to form a hologram module of the reflection type.

According to a second aspect of the present invention, there is provided an optical scanner including a light source for generating a laser beam, a polygon mirror driven to rotate for linearly scanning the laser beam, a reading window, a scanning pattern generating means for deflecting the laser beam reflected by said polygon mirror to produce a scanning pattern formed from a plurality of scanning lines on said reading window, a photo-detector for detecting scattered signal light scattered by an object to be read which is positioned in the neighbourhood of said reading window, and a light condensing means for deflecting and condensing the scattered signal light to said photo-detector, characterised in that
said light condensing means is constituted from a hologram of the reflection type disposed in a parallel, opposing relationship to said reading window and having a light condensing function.

Reference is made, by way of example, to the accompanying drawings in which:
FIG. 1 is an exploded perspective view of a conventional optical scanner as disclosed in US-A-4 848 862 and EP-A-0 263 696, wherein holograms of the transmission type are used for a reading window;
FIGS. 2A and 2B are schematic side elevational views illustrating light paths in the conventional optical scanner shown in FIG. 1;
FIG. 3 is an exploded perspective view similar to FIG. 1, showing an optical scanner which is not in accordance with the present invention, but useful for understanding the same;
FIG. 4 is a perspective view showing principal parts of the optical scanner of FIG. 3;
FIG. 5 is a schematic perspective view, partly broken, of a first embodiment of the present invention;
FIG. 6A is a schematic view illustrating a method of forming a hologram of the reflection type having an ordinary mirror function and a laser beam condensing function;
FIG. 6B is a schematic view illustrating a method of forming a hologram of the reflection type having a concave mirror function;
FIG. 7 is a schematic perspective view, partly broken, of a second embodiment of the present invention;
FIG. 8A is a schematic side elevational view illustrating a light path of a scanning laser beam in the second embodiment of the present invention;
FIG. 8B is a schematic side elevational view illustrating light paths of scattered signal light in the second embodiment of the present invention:
FIG. 9 is a schematic perspective view, partly broken, of a third embodiment of the present invention;
FIG. 10A is a schematic side elevational view illustrating a light path of a scanning laser beam in the third embodiment mentioned above; and
FIG. 10B is a schematic side elevational view illustrating light paths of scattered signal light in the third embodiment mentioned above.

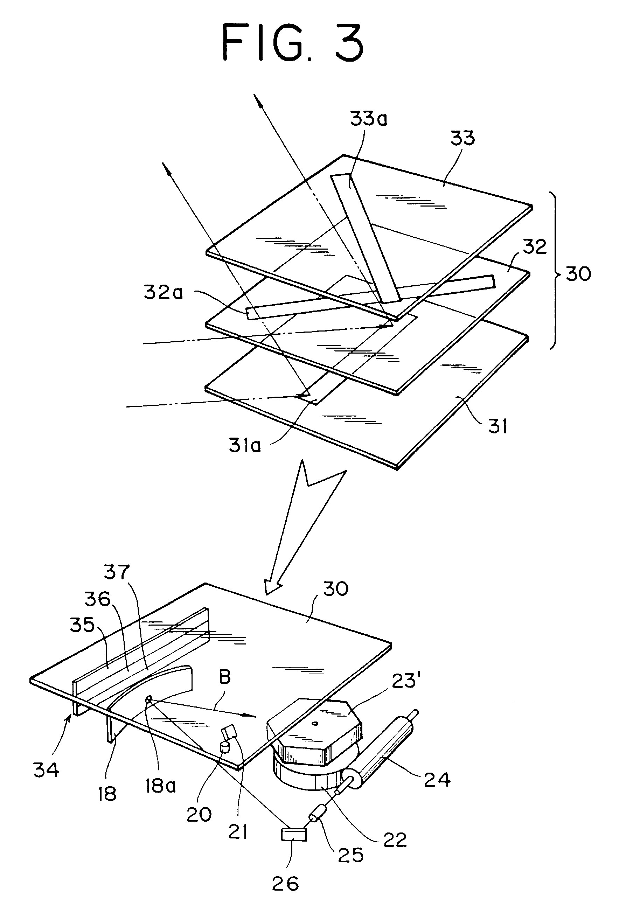

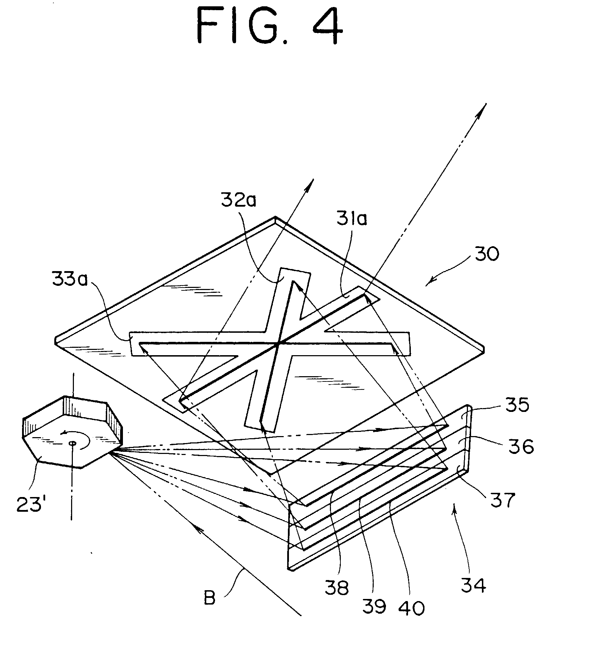

An optical scanner which is not an embodiment of the invention but is useful for understanding the present invention will be described first with reference to FIGS. 3 and 4, by way of background explanation. Referring first to FIG. 3, a hologram 34 of the reflection type for generation of a scanning pattern, a concave mirror 18 having a through-hole 18a formed therein and having a curved reflecting face, a photo-detector 20, a reflecting mirror 21, a polygon mirror 23' having six reflecting faces and connected to be driven to rotate by a motor 22, a He-Ne laser tube 24, a beam shaper 25 and another reflecting mirror 26 are disposed below a reading window 30 in a substantially similar configuration to that of the prior art apparatus shown in FIG. 1. In the optical scanner of FIG. 3, the scanning pattern generating mirror means 14 constituted from the three mirrors and the bottom mirror 19 of the prior art apparatus shown in FIG. 1 are replaced by the hologram 34 of the reflection type.

A laser beam is emitted from the He-Ne laser tube 24 and then shaped in beam diameter by the beam shaper 25, whereafter it is reflected toward the concave mirror 18 by the reflecting mirror 26. The laser beam is further reflected by a back mirror not shown disposed behind the through-hole 18a of the concave mirror 18 and thus introduced to the polygon mirror 23' which is being rotated by the motor 22.

The polygon mirror 23' has, for example, 6 reflecting faces, of which three adjacent ones are disposed at different angles from each other with respect to an axis of rotation of the polygon mirror 23' such that a laser beam B introduced thereto in the same direction may be reflected therefrom at somewhat different emergent angles from each other in a vertical direction so that it may successively scan, within a range of the same deflection angle, strip holograms 35, 36 and 37 provided in three layers or stages on the hologram 34 of the reflection type.

The reflection type hologram 34 for generation of a scanning pattern is constituted such that the three strip holograms 35, 36 and 37 of the reflection type having different diffracting directions from each other are disposed in a vertically overlapping relationship in the same vertical plane, and each of the strip holograms 35, 36 and 37 has interference fringes formed therein such that they may diffract a scanning beam introduced thereto from the polygon mirror 23' so as to irradiate the scanning beam upon strip holograms 31a, 32a and 33a of the transmission type of the reading window 30 from below. In producing a hologram of the reflection type, a reference beam is introduced to one face of a photographic plate in the same direction with a laser beam which is to be used upon reproduction of a hologram while an object beam is introduced to the other face of the photographic plate in such a direction that a desired scanning line may be formed on the reading window upon reproduction of the hologram. With this method, a hologram of the reflection type having an arbitrary diffraction angle can be produced.

The reading window 30 is constituted such that three glass plates 31, 32 and 33 having thereon the strip holograms 31a, 32a and 33a of the transmission type having different directions are placed in layers such that the strip holograms 31a, 32a and 33a may extend in an intersecting relationship with each other. The reading window 30 thus diffracts a laser beam introduced thereto in a predetermined direction from below a lower face thereof and passes the laser beam therethrough to an upper face thereof so that it may project a scanning laser beam in a predetermined scanning pattern to the upper side of the reading window 30. In producing a hologram of the transmission type, an object beam and a reference beam are introduced to a face of a photographic plate in the same direction of the photographic plate. An arbitrary diffraction angle can be obtained by changing the irradiating direction of such object beam.

Subsequently, an operation of the hologram 34 of the reflection type used in the FIG. 3 optical scanner will be described with reference to FIG. 4. When scanning beams are successively irradiated upon the plurality of stages of strip holograms 35, 36 and 37 from the polygon mirror 23' which is being driven to rotate by the motor 22, the scanning beams are diffracted at different angles from each other by the strip holograms 35, 36 and 37 so that they scan the reading window 30 in a predetermined scanning pattern in such a manner as described below.

In the example shown, when the strip hologram 35 on the upper stage is scanned as a along a scanning line 38 by the scanning beam from one of the reflecting faces of the polygon mirror 23', the laser beam diffracted by the strip hologram 35 of the reflection type and reflected obliquely upwardly scans the strip hologram 31a of the transmission type of the reading window 30 along a scanning line substantially parallel to the plane of the hologram 34 of the reflection type. Subsequently, when the strip hologram 36 of the reflection type on the middle stage is scanned as along another scanning line 39 by the scanning beam from a next one of the reflecting faces of the polygon mirror 23', the laser beam is reflected in a somewhat twisted condition by the strip hologram 36 of the reflection type so that it scans the inclined strip hologram 33a of the transmission type on the reading window 30. Further, when the strip hologram 37 of the reflection type on the lower stage is scanned as along a further scanning line 40 by the scanning beam reflected by a third reflecting face of the polygon mirror 23', the laser beam is reflected in a reversely twisted condition to that of the case of the scanning beam from the strip hologram 36 on the middle stage described above so that it scans the strip hologram 32a of the transmission type of the reading window 30.

On the other hand, scattered signal light from a bar code passes the light path reversely to the scanning beam and is thus introduced to the hologram 34 of the reflection type from the reading window 30 so that it is diffracted to the polygon mirror 23' by the hologram 34 of the reflection type. The scattered signal light is further reflected toward the concave mirror 18 by the polygon mirror 23'. Since the signal light has some expansion as different from a scanning beam, it is condensed by and reflected from the concave mirror 18 having a wide reflecting area. The signal light is further reflected by the mirror 21, and then detected by the photo-detector 20 provided at the position of the focus of the concave mirror 18.

Such construction described above enables elimination of the opposite side mirrors and the bottom mirror which are necessitated by the prior art apparatus described above.

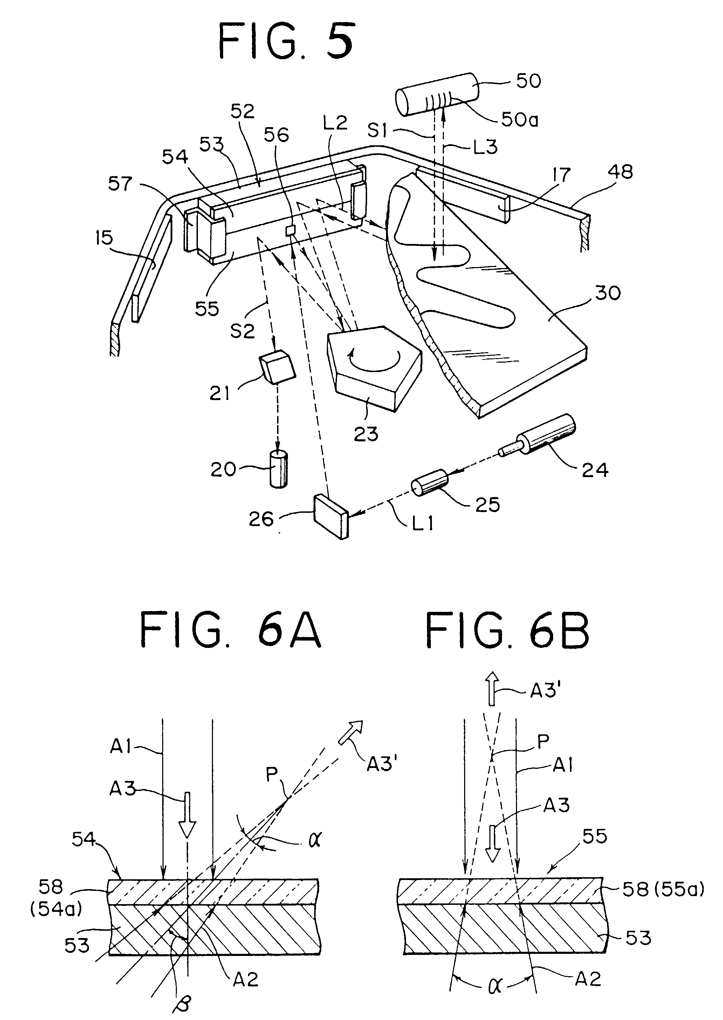

A first embodiment of the present invention will now be described with reference to FIGS. 5, 6A and 6B. In the present embodiment, substanially like parts or elements are denoted by like reference characters to those of the optical scanner of FIG.3 and the prior art device of FIG. 1 described above, and overlapping description thereof is omitted herein to avoid redundancy.

The present embodiment has a substantially similar construction to that of the prior art apparatus shown in FIG. 1 except that the centrally positioned one 16 of the three mirrors which constitute the scanning pattern generating mirror means 14 of the prior art apparatus shown in FIG. 1 and the concave mirror 18 positioned below the mirror 16 are integrated into a unitary hologram module 52 of the reflection type.

Referring to FIG. 5, the hologram module 52 of the reflection type is constituted such that a hologram 54 of the reflection type having a predetermined mirror function is formed on the upper half area of a transparent substrate 53 made of glass or the like while a hologram 55 of the reflection type having a predetermined concave mirror function is formed on the lower half area of the transparent substrate 53. A small plane mirror 56 is mounted at a central location of the hologram 55 of the reflection type having a concave mirror function. The hologram module 52 of the reflection type is secured to a housing 48 by means of a pair of fixing members 57.

Subsequently, processes of forming a hologram will be described with reference to FIGS. 6A and 6B. FIG. 6A illustrates an example of formation of a hologram of the reflection type having an ordinary mirror function and a light beam converging function while FIG. 6B illustrates an example of formation of a hologram of the reflection type having a concave mirror function. In either case, a photosensitive film 58 consisting of gelatine mixed with silver and having a thickness of several µm is formed on a transparent substrate 53 made of glass or the like.

In forming the hologram 54 of the reflection type having a mirror function, a laser beam A1 of a collimated plane wave is irradiated vertically upon the photosensitive film 58 shown in FIG. 6A, while another laser beam A2 of a converging spherical wave which converges at a predetermined angle α is irradiated at another predetermined angle β from the side of the transparent substrate 53. Subsequently, developing processing and fixing processing are performed in accordance with an ordinary method to form a hologram film 54 on the photosensitive film 58.

With the hologram 54 of the reflection type formed in this manner, a laser beam A3 incident in the same direction with the laser beam A1 is converted by the hologram film 54a into a diffracted beam A3', which advances in the direction of the light path of the laser beam A2. Thus, the diffracted beam A3' is focused at a point P and thereafter advances rectilinearly. On the other hand, a laser beam which advances reversely along the light path of the diffracted beam A3' is diffracted by the hologram film 54a and then advanced reversely along the light path of the laser beam A3. Accordingly, the hologram 54 can be provided with a function as a mirror satisfying a predetermined condition by suitably selecting the converging angle α and the incident angle β of the laser beam A2.

Meanwhile, in forming the hologram 55 of the reflection type having a concave mirror function, a laser beam A1 of a collimated plane wave is irradiated vertically upon the photosensitive film 58 while another laser beam A2 of a spherical wave having a converging angle α is irradiated perpendicularly upon the transparent substrate 53 from the side of the transparent substrate 53 as shown in FIG. 6B. After that , developing and fixing processing is performed in accordance with an ordinary method to form a hologram film 55a on the photosensitive film 58.

With the hologram 55 of the reflection type formed in this manner, a laser beam A3 incident in the direction of the laser beam A1 described above is diffracted by the hologram film 55a into a diffracted beam A3', which then advances along the light path of the laser beam A1 but in the reverse direction and is thus focused at the point P whereafter it advances straightforwardly. On the other hand, a laser beam which advances reversely along the light path of the diffracted laser beam A3' is diffracted by the hologram film 55a and then advances reversely along the light path of the laser beam A3. Accordingly, a hologram of the reflection type having a function as a concave mirror having an arbitrary distance to the focal point P can be formed by suitably selecting the convergent angle α of the laser beam A2.

In the following, light paths in the present embodiment will be described briefly.

A laser beam L1 emitted from a laser tube 24 and shaped to have a predetermined diameter by a beam shaper 25 is reflected at first by a mirror 26 and then by the small mirror 56 provided on the hologram 55 of the reflection type and is introduced to the polygon mirror 23. Since the polygon mirror 23 is being rotated at a high speed, the laser beam introduced to the polygon mirror 23 from the small mirror 56 and reflected by the polygon mirror 23 is then reflected or diffracted by the scanning pattern generating mirror 15, reflection type hologram 54 or scanning pattern generating mirror 17 while successively scanning surfaces of them so that it makes laser beams L2 which advance toward the reading window 30. After then, the laser beams L2 are projected from the reading window 30 as diffracted laser beams L3, which scan a bar code 50a of a commodity 50 disposed above the reading window 30.

On the other hand, scattered signal light S1 from the bar code 50a advances reversely along the substantially same light path with the incident beam and is introduced to the hologram 55 of the reflection type having a concave mirror function, and then diffracted light S2 from the hologram 55 of the reflection type is condensed by way of a mirror 21 to a photo-detector 20 so that the bar code information is read by the photo-detector 20.

With the optical scanner having such a construction as described above, a scanning pattern generating mirror and a concave mirror which are conventionally required to be adjusted independently of each other are replaced by the reflection type hologram module 52 having an equivalent function. Consequently, assembly of those parts to the housing 48 is facilitated, and the number of man-hours for adjustment as an entire apparatus can be reduced significantly.

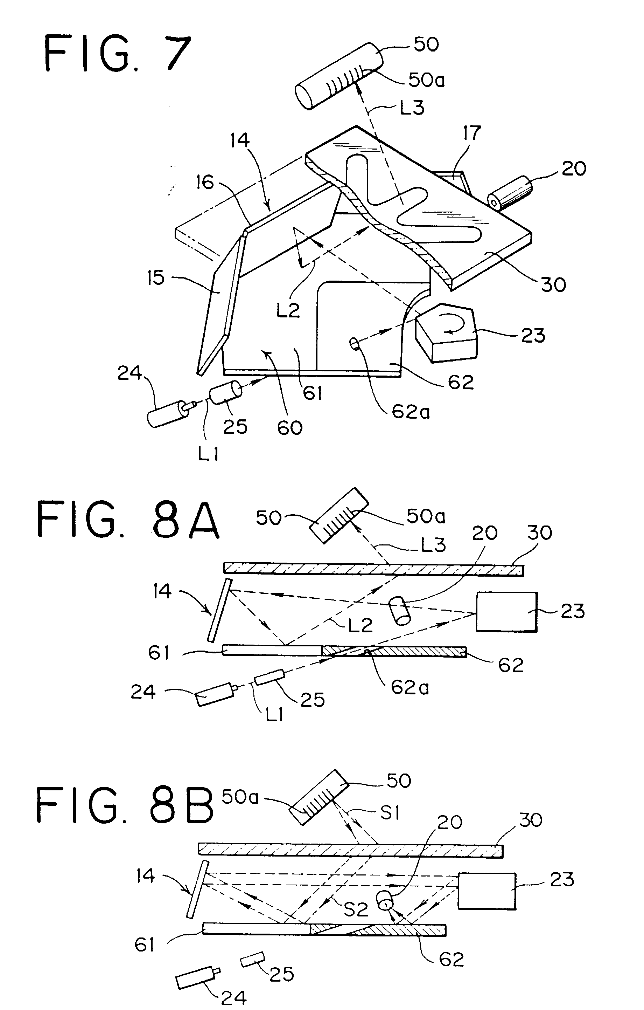

Subsequently, a second embodiment of the present invention will be described with reference to FIGS. 7, 8A and 8B. The present embodiment is characterized in that a bottom mirror which is disposed on a bottom of the apparatus in a parallel, opposing relationship to a reading window is constructed in an integrated relationship to a hologram of the reflection type having a light converging function. Since such construction eliminates the necessity of a concave mirror which is required for the prior art apparatus, miniaturization of the apparatus can be attained.

Referring to FIG. 7, a bottom optical plate 60 is disposed in parallel to a reading window 30. The bottom optical plate 60 is constituted such that a hologram 62 of the reflection type having a predetermined diffracting function and a predetermined light converging function is adhered to a bottom mirror 61. The hologram 62 of the reflection type has a through-hole 62a formed therein for passing a laser beam L1 from a laser tube 24 therethrough. While the construction of the other components of the present embodiment is different a little in configuration, it is substantially similar to that of the prior art apparatus shown in FIG. 1, and like parts are denoted by like reference numerals and description thereof is omitted herein to avoid redundancy.

Referring to FIG. 8A , there is shown a laser beam scanning light path. A laser beam L1 emitted from the laser tube 24 passes through the through-hole 62a formed in the hologram 62 of the reflection type constituting the bottom optical plate 60 and is introduced to the polygon mirror 23 so that it is scanned by the polygon mirror 23. After that, the laser beam L1 is successively reflected by the scanning pattern generating mirror means 14 and the bottom mirror 61 and then diffracted by any of strip holograms of the transmission type provided on the reading window 30 to form a beam L3, which then scans a bar code 50a applied to a commodity 50.

Referring now to FIG. 8B , there are shown returning signal light paths. Scattered signal light S1 from the bar code 50a is diffracted by the reading window 50a to form signal light S2, which then advances reversely along the substantially same light path with the incident beam so that it comes to a location near the through-hole 62a of the bottom optical plate 60. There, since the hologram 62 of the reflection type having a light converging function is provided in an area of the location to which the signal light S2 comes, the signal light S2 is diffracted in a predetermined direction. Then, the signal light S2 is focused to the photo-detector 20 so that information of the bar code 50a is read by the photo-detector 20.

With the optical scanner having such a construction as described above, since the bottom optical plate 60 has functions as a conventional bottom mirror and a conventional concave mirror, a concave mirror which is required in the prior art apparatus is unnecessary. As a result, the entire apparatus can be constructed with a reduced thickness.

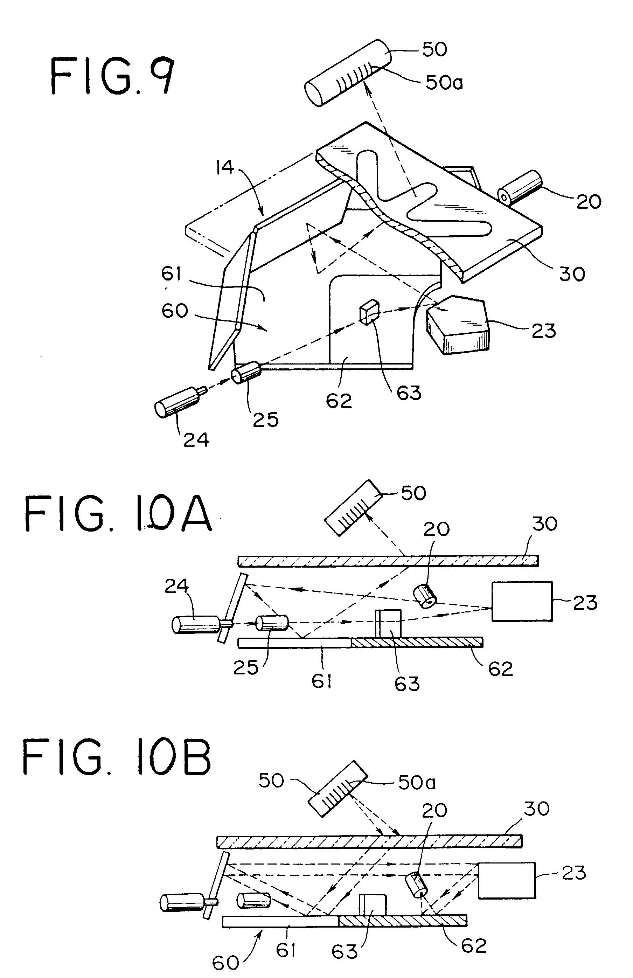

Referring now to FIG. 9 , there is shown a third embodiment of the present invention. The present embodiment is substantially same in construction as the second embodiment of the present invention except that a plane mirror 63 is provided on a hologram 62 of the reflection type. In the present embodiment, since a laser tube 24 and a beam shaper 25 can be disposed between a reading window 30 and a bottom optical plate 60, the entire apparatus can be further reduced in size compared with the second embodiment.

## Claims

1. An optical scanner including a light source (24) for generating a laser beam, a polygon mirror (23) driven to rotate for linearly scanning the laser beam, a reading window, a scanning pattern generating means (Fig 5: 15, 17, 54) for deflecting the laser beam reflected by said polygon mirror to produce a scanning pattern formed from a plurality of scanning lines on said reading window (30), a photo-detector (20) for detecting scattered signal light scattered by an object to be read which is positioned in the neighbourhood of said reading window, and a light condensing means (Fig 5: 55) for deflecting and condensing the scattered signal light to said photo-detector, characterised in that
said scanning pattern generating means is formed from a plurality plane mirrors (15, 17) and at least one hologram (54) of the reflection type; said light condensing means is constituted from a hologram (55) of the reflection type; and
said light condensing means and said at least one hologram are integrated with each other to form a hologram module (52) of the reflection type.

2. An optical scanner including a light source (24) for generating a laser beam, a polygon mirror (23) driven to rotate for linearly scanning the laser beam, a reading window (30), a scanning pattern generating means (Figs 7,9: 15-17, 61) for deflecting the laser beam reflected by said polygon mirror to produce a scanning pattern formed from a plurality of scanning lines on said reading window, a photo-detector (20) for detecting scattered signal light scattered by an object to be read which is positioned in the neighbourhood of said reading window, and a light condensing means (62) for deflecting and condensing the scattered signal light to said photo-detector, characterised in that
said light condensing means is constituted from a hologram (62) of the reflection type disposed in a parallel, opposing relationship to said reading window (30) and having a light condensing function.

3. An optical scanner according to claim 2, wherein said hologram (62) of the reflection type has a through-hole (62a) formed therein for passing the laser beam from said light source therethrough toward said polygon mirror.

4. An optical scanner according to claim 2, wherein said hologram (62) of the reflection type has a plane mirror (63) provided thereon for reflecting the laser beam from said light source toward said polygon mirror.

5. An optical scanner according to any preceding claim, wherein said reading window (30) has a plurality of strip holograms (33a, 32a, 31a) of the transmission type provided thereon.

## Patentansprüche

1. Optischer Scanner mit einer Lichtquelle (24) zum Erzeugen eines Laserstrahls, einem Polygonspiegel (23), der zur Durchführung einer Drehung angetrieben wird, um den Laserstrahl in eine lineare Abtastbewegung zu bringen, einem Lesefenster, einer ein Abtastmuster erzeugenden Einrichtung (Fig. 5: 15, 17, 54) zum Ablenken des Laserstrahls, der von dem Polygonspiegel reflektiert wurde, um ein Abtastmuster zu erzeugen, welches aus einer Vielzahl von Abtastzeilen oder Abtastlinien auf dem Lesefenster (30) gebildet ist, einem Photodetektor (20) zum Detektieren des gestreuten Signallichtes, welches von einem zu lesenden Objekt gestreut wurde, das in der Nachbarschaft des Lesefensters positioniert ist, und einer Licht kondensierenden Einrichtung (Fig. 5: 55) zum Ablenken und zum Kondensieren des gestreuten Signallichtes zu dem Photodetektor hin, dadurch **gekennzeichnet,** daß
die das Abtastmuster erzeugende Einrichtung aus einer Vielzahl von ebenen Spiegeln (15, 17) und wenigstens einem Hologramm (54) vom Reflexionstyp gebildet ist, die Licht kondensierende Einrichtung aus einem Hologramm vom Reflexionstyp gebildet ist, und
die Licht kondensierende Einrichtung und das genannte wenigstens eine Hologramm miteinander integriert sind, um einen Hologramm-Modul (52) vom Reflexionstyp zu bilden.

2. Optischer Scanner mit einer Lichtquelle (24) zum Erzeugen eines Laserstrahls, einem Polygonspiegel (23), der zur Durchführung einer Drehung angetrieben wird, um den Laserstrahl in eine lineare Abtastbewegung zu bringen, einem Lesefenster (30), einer ein Abtastmuster erzeugenden Einrichtung (Fig. 7, 9: 15-17, 61) zum Ablenken des Laserstrahls, der von dem Polygonspiegel reflektiert wurde, um ein Abtastmuster zu erzeugen, welches aus einer Vielzahl von Abtastzeilen oder Abtastlinien auf dem Lesefenster gebildet ist, einem Photodetektor (20) zum Detektieren des gestreuten Signallichtes, welches von einem zu lesenden Objekt gestreut wurde, das in der Nachbarschaft des Lesefensters positioniert ist, und einer Licht kondensierenden Einrichtung (62 ) zum Ablenken und zum Kondensieren des gestreuten Signallichtes zu dem Photodetektor hin, dadurch **gekennzeichnet,** daß
die Licht kondensierende Einrichtung aus einem Hologramm (62) vom Reflexionstyp gebildet ist, welches in einer parallelen gegenüberliegenden Beziehung zu dem Lesefenster (30) angeordnet ist und eine Lichtkondensierfunktion besitzt.

3. Optischer Scanner nach Anspruch 2, bei dem das Hologramm (62) vom Reflexionstyp eine durchgehende Öffnung (62a) besitzt, die darin ausgebildet ist, um den Laserstrahl von der Lichtquelle zum Polygonspiegel hin dort hindurch zu lassen.

4. Optischer Scanner nach Anspruch 2, bei dem das Hologramm (62) vom Reflexionstyp einen ebenen Spiegel (63) aufweist, der auf diesem vorgesehen ist, um den Laserstrahl von der Lichtquelle zu dem Polygonspiegel hin zu reflektieren.

5. Optischer Scanner nach irgendeinem der vorhergehenden Ansprüche, bei dem das Lesefenster (30) eine Vielzahl von Streifenhologrammen (33a, 32a, 31a) vom Durchlaßtyp aufweist, die auf diesem vorgesehen sind.

## Revendications

1. Scanner optique comprenant une source lumineuse (24) pour générer un faisceau laser, un miroir polygonal (23) entraîné pour tourner afin de balayer linéairement le faisceau laser, une fenêtre de lecture (30), un moyen de génération de modèle de balayage (figure 5 : 15, 17, 54) pour dévier le faisceau laser réfléchi par ledit miroir polygonal pour produire un modèle de balayage formé par une pluralité de lignes de balayage sur ladite fenêtre de lecture (30), le photodétecteur (20) pour détecter la lumière de signal diffusée, diffusée par un objet à lire qui est positionné au voisinage de ladite fenêtre de lecture, et un moyen de condensation de lumière (figure 5 : 55) pour dévier et condenser la lumière de signal diffusée sur ledit photodétecteur, caractérisé en ce que
ledit miroir de génération de modèle de balayage est formé à partir d'une pluralité de miroirs plans (15, 17) et au moins un hologramme (54) du type à réflexion ; ledit moyen de condensation de lumière est constitué par un hologramme (55) du type à réflexion ; et
ledit moyen de condensation de lumière et ledit au moins un hologramme sont intégrés l'un à l'autre pour former un module d'hologramme (52) du type à réflexion.

2. Scanner optique comprenant une source lumineuse (24) pour générer un faisceau laser, un miroir polygonal (23) entraîné afin de tourner pour balayer linéairement le faisceau laser, une fenêtre de lecture (30), un moyen de génération de modèle de balayage (figure 7, 9 : 15-17, 61) pour dévier le faisceau laser réfléchi par ledit miroir polygonal pour produire un modèle de balayage formé par une pluralité de lignes de balayage sur ladite fenêtre de lecture, un photodétecteur (20) pour détecter la lumière de signal diffusée, diffusée par un objet à lire qui est positionné au voisinage de ladite fenêtre de lecture, et un moyen de condensation de lumière (62) pour dévier et condenser la lumière de signal diffusée sur ledit photodétecteur, caractérisé en ce que
ledit moyen de condensation de lumière est constitué par un hologramme (62) du type à réflexion disposé dans une relation parallèle, et en opposition à ladite fenêtre de lecture (30) et ayant une fonction de condensation de lumière.

3. Scanner optique selon la revendication 2, dans lequel ledit hologramme (62) du type à réflexion a un trou traversant (62a) formé dans celui-ci pour passer le faisceau laser de ladite source lumineuse à travers celui-ci vers ledit miroir polygonal.

4. Scanner optique selon la revendication 2, dans lequel ledit hologramme (62) du type à réflexion a un miroir plan (63) fourni sur celui-ci pour réfléchir le faisceau laser de ladite source lumineuse vers ledit miroir polygonal.

5. Scanner optique selon l'une quelconque des revendications précédentes, dans lequel ladite fenêtre de lecture (30) a une pluralité d'hologrammes en bande (33a, 32a, 31a) du type à transmission fournis sur celle-ci.
